# EUROPEAN PATENT SPECIFICATION

(11) **EP 3 120 289 B1**
(45) Date of publication and mention of the grant of the patent: **14.08.2019**
(21) Application number: 15765429.4
(22) Date of filing: 18.03.2015
(51) Int. Cl.: G06F 21/60, H04W 4/02, G06F 21/35, H04W 12/02

(54) **COMPUTING DEVICE SECURITY**
COMPUTERVORRICHTUNGSSICHERHEIT
SÉCURITÉ DE DISPOSITIF INFORMATIQUE

(30) Priority: 21.03.2014 US 201461968907 P
(43) Date of publication of application: 25.01.2017
(73) Proprietor: BlackBerry Limited, Waterloo, ON N2K 0A7 (CA)
(72) Inventor: RISCOMBE-BURTON, Phillip, Dover, Delaware 19903 (US); CRANER, Lance, Dover, Delaware 19903 (US); VAISBORT, Ron, Dover, Delaware 19903 (US)
(74) Representative: Hanna Moore + Curley
(86) International application number: PCT/US2015/021308
(87) International publication number: WO 2015/143066

(56) References cited:
- US-A1- 2008 096 529
- US-A1- 2008 107 274
- US-A1- 2008 107 274
- US-A1- 2008 209 505
- US-A1- 2013 086 376
- US-B2- 7 428 411

## Description

### CROSS-REFERENCE TO RELATED APPLICATIONS

This Application claims the benefit of U.S. Provisional Application No. 61/968,907, filed March 21, 2014, the contents of which are incorporated herein by reference in their entirety.

### BACKGROUND OF THE INVENTION

### Field of the Invention

The present application relates to computing devices and computer programs for accessing data, and methods of increasing security of data using the same.

### Description of the Related Technology

Private or confidential data accessed using a computer device is often commonly protected by a password or security code to prevent unauthorized access of the data. For applications where high levels of security are required, data may be stored in an encrypted form so that it cannot be read by an unauthorized user who gains access to it. Typically, in order for an authorized user to access secure data the user is required to enter their password; entering the correct password enables the user to access the data.

Typically, data accessed on a computing device is displayed on a display screen for the user to view. However, displayed data may also be viewable by people other than the authorized user. Therefore, even though the data is protected by a password and/or is encrypted, once accessed by an authorized user its security may be compromised.

Furthermore, it is becoming increasingly common for private or confidential data (referred to hereinafter as secure data) to be accessed and viewed using portable or mobile computing devices such as laptops, tablets and mobile phones. Such data may be personal data (for example, online banking and mobile banking applications enable people to access their bank account information using a smart phone) or the data may be commercial data that a user is permitted to access via a portable or mobile device that is either provided by their employer, or that they provide themselves, to use to access their employer's data. Accessing data using a mobile or portable computing device further increases the risk of data being viewable by people other than an authorized user, since the environment in which the data is accessed is less controllable and subject to frequent change.

To mitigate such unauthorized access to private or confidential data, some existing security systems for computing devices are arranged to control access to data in accordance with an access policy that takes account of environmental factors, such as the location or velocity of the computing device.

However, such systems are often inaccurate in their determination of whether their environment is truly unsafe; for example, they may falsely determine that a safe environment is unsafe, causing inconvenience for the user. These problems may be exacerbated with devices having limited capabilities to sense their environment. US2008/107274 discloses a system including a transmit unit to transmit a signal including a data key, and a receiving unit to receive the signal. The receiving unit is configured to determine an encryption key based at least in part on the data key and to decrypt encrypted data using the encryption key. US2008/096529 discloses location based security rules provided for preventing unauthorized access to a computing device. The location-based security rules enable a user to access a requested item or information when the user provides proper identification information based in part on the location of the user.

It is an object of the present application to at least mitigate some of the problems of the prior art.

### SUMMARY

In some embodiments, each of the plurality of security factors relate to one or more of: a number of people in close proximity to the computing device, a detected location of the computing device, the presence of a communications network, and the presence of other trusted computing devices.

In some embodiments, the detected environmental conditions may include one or more of: a sound level, a number of detected voices, a number of detected faces, a number of proximate other computing devices, distance from a geographic location, a detected velocity of the computing device, and a detected acceleration of the computing device.

In some embodiments, the computing device is arranged to determine whether the respective security conditions are satisfied by comparing values associated with each of the plurality of security factors with respective thresholds.

In some embodiments, the threshold values include one or more of: : a sound level, a number of detected voices, a number of detected faces, a number of proximate other computing devices, distance from a geographic location, a detected velocity of the computing device, and a detected acceleration of the computing device.

In some embodiments, the action may comprise issuing an alert.

In some embodiments, issuing the alert may comprise one or more of: activating a visible alert, activating an audible alert, activating a vibration unit, providing an on-screen notification, providing an audible notification, initiating an email or push notification, and recording a security state event on a remote server.

In some embodiments, the action may comprise preventing access to data.

In some embodiments, access to the data is prevented by one or more of: preventing display of the data, locking the computing device, locking an application running on the computing device, obscuring displayed data, encrypting the data, and deleting the data.

In some embodiments, the computing device is arranged to receive, from a policy server, a security policy specifying said respective security conditions and said action; and initiate said action in accordance with the security policy.

According to a second aspect of the present application, there is provided a computer program that may comprise executable instructions which, when executed by a computing device, cause the computing device to: determine a plurality of security factors, each security factor may be determined on the basis of a detected environmental condition relating to the computing device; and initiate an action to protect said data on condition that multiple ones of the plurality of security factors satisfy respective security conditions.

According to a first aspect of the present application, there is provided a mobile computing device according to claim 1.

In some embodiments, the computing device is arranged to detect environmental conditions using one or more of a microphone, an image sensor, a Bluetooth receiver, a Wi-Fi receiver, a geographic location determining device, and a GPS receiver.

In some embodiments, data indicative of the environmental condition detected at the other computing device is received, at the computing device, via a wireless communications means.

In some embodiments, the first security factor relates to the same environmental condition as the second security factor.

In some embodiments, the computing device is arranged to: compare the first security factor with the second security factor; determine a confidence value associated with the first security factor on the basis of said comparison; and initiate said action in response to the confidence value exceeding a predetermined threshold.

In some embodiments, the first security factor relates to a different environmental condition to the second security factor.

In some embodiments, the computing device is arranged to: initiate said action on condition that the first and second security factors satisfy respective security conditions.

In some embodiments, the first and second security factors each relate to one or more of: a number of people in close proximity to the computing device, a detected location of the computing device, the presence of a communications network, and the presence of other trusted computing devices.

In some embodiments, the detected environmental conditions include one or more of: a sound level, a number of detected voices, a number of detected faces, a number of proximate other computing devices, distance from a geographic location, a detected velocity of the computing device, and a detected acceleration of the computing device.

In some embodiments, each of the first and second security conditions is satisfied when a value associated with the respective security factor exceeds a respective threshold value.

In some embodiments, the threshold values include one or more of: a sound level, a number of detected voices, a number of detected faces, a number of other computing devices within a specified proximity, a detected location, a detected velocity of the computing device, and a detected acceleration of the computing device.

In some embodiments, the action may comprise issuing an alert. Issuing the alert may comprise one or more of: activating a visible alert, activating an audible alert, activating a vibration unit, providing an on-screen notification, providing an audible notification, initiating an email or push notification, and recording a security state event on a remote server.

In some embodiments, the action may comprise preventing access to data. Access to the data may be prevented by one or more of: preventing display of the data, locking the computing device, locking an application running on the computing device, obscuring displayed data, encrypting the data, and deleting the data.

In some embodiments, the computing device is arranged to poll computing devices for determining the further computing devices having a suitable sensor.

In some embodiments, the computing device is arranged to request information relating to the environmental condition of the computing device from one or more further mobile computing devices having a suitable sensor via a remote server.

According to a second aspect of the present application, there is provided a computer program according to claim 15.

According to a third aspect of the present application, there is provided a method according to claim 14.

The computer program of the second aspect and the method of the third aspect may be adapted to provide features corresponding to the first aspect.

Further features and advantages of the application will become apparent from the following description of embodiments of the application, given by way of example only, which is made with reference to the accompanying drawings.

### BRIEF DESCRIPTION OF THE DRAWINGS

Figure 1a is a schematic diagram illustrating the components of a computing device in accordance with an embodiment;
Figure 1b is a pictorial diagram illustrating the components of a computing device in accordance with an embodiment;
Figure 2a is a pictorial diagram illustrating a visual alert;
Figure 2b is a pictorial diagram illustrating a visual alert;
Figure 2c is a pictorial diagram illustrating a visual alert;
Figure 3 is a pictorial diagram illustrating an audible alert;
Figure 4 is a pictorial diagram illustrating a vibration alert;
Figure 5 is a flow diagram showing steps performed by a security application in performing a method of increasing the security of data accessible using a computing device; and
Figure 6 is a flow diagram showing steps performed by a security application in performing a method of increasing the security of data accessible using a computing device.

### DETAILED DESCRIPTION OF CERTAIN INVENTIVE EMBODIMENTS

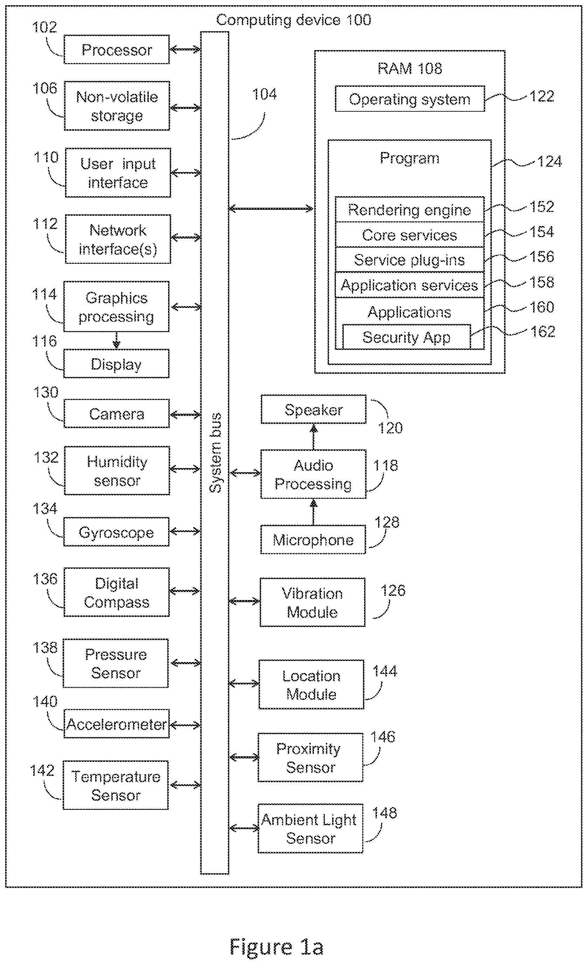

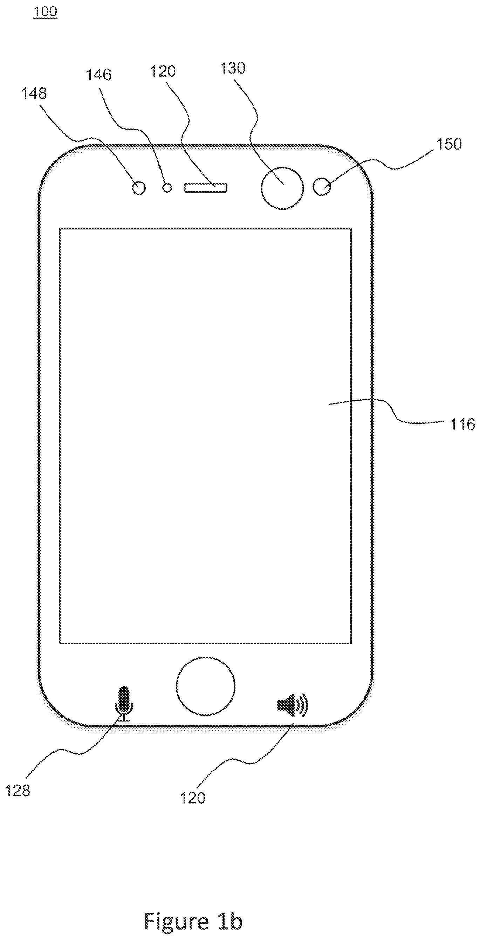

Figures 1a and 1b schematically illustrate the components of a computing device 100, which is an exemplary device used to illustrate the features of the present application. The computing device 100 is a portable computing device and may take the form of a Smartphone, a personal digital assistant (PDA), an e-reader, a tablet computer or a laptop computer. The computing device 100 includes a processor 102 that is able to transmit control messages to, receive status information from, and transmit data to and from components within the computing device 100 that are connected to a system bus 104, where these components may include a non-volatile storage device 106, random access memory (RAM) 108, user input interface 110, network interface 112, graphics-processing component 114, arranged to output a user interface to a display 116, an audio-processing component 118, arranged output sounds to a speaker 120. The processor 102, which is typically a microprocessor, processes instructions stored in the RAM 108 that have been loaded from the non-volatile storage device 106, which could be for example a flash memory or a hard disk drive. These instructions are in the form of
computer software in the form of one or more programs that implement an operating system 122 and one or more application programs, referred to hereinafter as programs 124. The RAM 108 is also used by the programs 124 running on the processor 102 as a means of storing and accessing data in the form of electronic signals where the data is used during the execution of the programs 124.

The operating system 122 is computer software in the form of a program or set of programs whose instructions are loaded from non-volatile storage 106 by the processor 102 and executed when the computing device 100 is turned on. The operating system 122 may start further programs 124 automatically (i.e. without further user input) and/or may allow a user to start further programs 124, for example via a user interface provided by the operating system 122. The operating system 122 enables the sharing of the processing power provided by the processor 102 between the programs 124 running on the processor 102.

The user input interface 110 receives user input from a user input device or devices (not shown). User input devices may include a keypad, keyboard, touch-screen display, mouse and/or remote control, or any other pointer device, which may be incorporated within the computing device 100 or may be connected to it via a wired or wireless connection.

The computing device 100 includes a network interface 112 (or a plurality of such interfaces) that allows programs 124 running on the processor 102 to transmit and receive data to and from a number of other devices and systems via a communications network or a plurality of such networks. The network interface 112 (or plurality of such interfaces) may be able to connect to the communications network via a wireless access node using one or more of a number of radio access technologies and/or via a wired technology such as a modem and/or an Ethernet card. For example the network interface 112 (or plurality of such interfaces) may be able to connect to the communications network using one or more of a number of radio access technologies including Global System for Mobile Communications (GSM), Universal Mobile Telecommunications System (UMTS), Long Term Evolution (LTE), fixed wireless access (such as IEEE 802.16 WiMax), and wireless networking (such as IEEE 802.11 WiFi, IEEE 802.15 Bluetooth, and IEEE 802.15 ZigBee).

The communications network and/or wireless access node may also provide access to the Internet.

The graphics-processing component 114 is able to render graphics in accordance with commands made by the programs 124 running on the processor 102 and output these to a display 116, which may reside within the computing device 100. The display 116 may be an external component connected to the computing device 100 via one or more of composite video, component video, Video Graphics Array, Digital Visual Interface, and High-Definition Multimedia Interface connection. The display 116 may be an integral component of the computing device 100, and may be a touch-screen display.

The audio-processing component 118 is able to generate sounds in accordance with commands made by the programs 124 running on the processor 102 and output those sounds using the speaker 120. The speaker 120 may be a micro-speaker and there may be more than one speaker 120 in the computing device 100. For example, one speaker 120 may be for outputting voice sounds during telephone calls, and a different speaker 120 (or set of speakers 122) may be for outputting ringtones, music, sound accompanying video displayed on the display, and any other sounds.

The computing device 100 may comprise a vibration module 126 which typically may comprise a vibrating motor that is able to cause the computing device 100 to vibrate in accordance with commands made by the programs 124 running on the processor 102.

The computing device 100 includes one or more sensors that are arranged to sense, detect, measure, or receive signals relating to, a physical property of the environment in which the computing device is operating.

In the computing device 100 shown in figure 1, the sensors include a microphone 128, a camera (may comprise an image sensor) 130, a humidity sensor 132, a gyroscope 134, a digital compass 136, an atmospheric pressure sensor 138, an accelerometer 140, a temperature sensor 142, a location module 144, a proximity sensor 146, and an ambient light sensor 148. However, it will be understood that the computing device 100 could have any combination of such sensors and additionally or alternatively may include other types of sensor.

The microphone 128 is arranged to generate an electrical signal, representative of a detected sound, which can be processed by the audio-processing component 118. The microphone 128 may be any device configured to respond to sound by producing an electrical signal representative of the sound. For example, the microphone 128 may be on of a piezoelectric microphone, a fiber optic microphone, a laser microphone, and a MEMS microphone, or any other suitable type of microphone. In some computing devices 100 the may have two or more microphones 128 (or two or more microphone ports) that enable the computing device to perform so-called "dual-mic noise suppression".

The camera 122 is arranged to detect an image and convey a digital representation of the image to the processor 102. The camera 122 may comprise a lens arranged to focus light to form an image on an image sensor. The image sensor is typically an array of light sensitive pixels. For example, the sensor may be a CCD sensor or a CMOS sensor. The camera may also include additional components arranged to perform optical functions such as adjusting the focus and zoom of the image formed on the image sensor. The camera may be arranged to form 3D or stereoscopic images.

Typically, the camera 122 will be orientated such that its field of view covers the user while the user views the display 116. For example, the camera 122 may be attached to or mounted within a bezel or frame surrounding the display 116. Alternatively or additionally, the computing device 100 may include a camera arranged such that its field of view is directed away from the user while the user views the display 116 such that the computing device 100 can be used to take photographs or videos that are simultaneously displayed to the user on the display 116.

The camera may also include a light 150 such as an LED which may, for example, be used to illuminate objects that are to be imaged using the camera.

The humidity sensor 124 may be one of a capacitive humidity sensor, a resistive humidity sensor, or a thermal conductivity humidity sensor. The humidity sensor may be arranged to measure either absolute or relative humidity.

The gyroscope 126 is arranged to measure the angular rotational velocity of the computing device 100 to enable the orientation of the computing device 100 to be determined. The gyroscope 126 may include one or more of a MEMS-based gyroscope, a fiber optic gyroscope, and a piezoelectric gyroscope.

The digital compass 128 is arranged to detect the orientation of the computing device with respect to the Earth's magnetic poles. The digital compass 128 may include one or more magnetometers, each arranged to measure a magnitude of a magnetic field local to the computing device 100. The magnetometer may be a three-axis (vector) magnetometer arranged to measure both the magnitude and direction of the local magnetic field. The magnetometers may be, for example, magneto-resistive permalloy sensors or Hall effect magnetometers.

The atmospheric pressure sensor 130 is arranged to detect or measure atmospheric pressure local to the computing device 100. For example, the pressure sensor 130 may be a piezoelectric sensor-equipped MEMS device configured to track the altitude of the computing device 100. Such devices may be used to confirm (using known topographical data, for example) the location of the computing device 100 or to determine, for example, on which floor of a building the computing device 100 is located and may be used.

The accelerometer 132 is an inertial sensor which measures acceleration of the computing device 100 relative to a free-falling frame of reference. The accelerometer 132 measures the magnitude and direction of the acceleration, and can be used to sense the orientation of the computing device 100 (pedometer).

The temperature sensor 134 may be any device arranged to detect the temperature local to the computing device 100, or to detect a change in that temperature. The temperature sensor 134 may, for example, include a thermistor, a thermocouple, a resistance temperature detectors, or a silicon bandgap temperature sensor.

The location module 138 is arranged to determine the location of the computing device 100. The location module 138 may, for example, obtain location information from a network operator of a network (such as a cellular network) in which the computing device is operating, that the network operator determines based on measurements of a signal from the computing device such as the angle of approach of the signal, the time difference of arrival of the signal at different points (typically receiver base stations) in the network, and/or the strength of the signal when it reaches one or more receiver base stations. Alternatively or additionally, the computing device may have its own location determining capability. For example, the computing device 100 may include a GPS receiver that receives signals from GPS satellites, determines the locations of at least three of those satellites, and determines where the computing device is in relation to the at least three satellites. Using trilateration the computing device (or a GPS module within it) is able to determine its own location.

The proximity sensor 140 may be any type of sensor arranged to detect when the presence of a nearby person without that person necessarily making physical contact with the computing device 100. The proximity sensor 140 may include one or more of a capacitive sensor, a capacitive photoelectric sensor, a capacitive displacement sensor, a passive optical sensor, an active optical sensor, or any other suitable type of sensor.

The ambient light sensor 142 may be any photosensor capable of detecting ambient light levels. For example, the ambient light sensor may be a photodiode. The ambient light sensor 142 is typically used by the computing device 100 to detect ambient light levels and to adjust the brightness of the display 116 on the basis of the detected light level so as to improve energy efficiency (for example, to extend battery life) and to improve the visibility of what is displayed on the display 116.

Individual sensors may be replaced by combined sensors and/or data from individual sensors may be combined to provide a more accurate detection of the environment in which the computing device is operating. For example, one or more accelerometers, gyroscopes and possibly also magnetometers may be combined to form what is commonly referred to as an Inertial Measurement Unit (IMU). Typically, an IMU in a mobile computing device may comprise three accelerometers and three gyroscopes and optionally three magnetometers. The accelerometers are placed such that their measuring axes are orthogonal to each other and each measure inertial acceleration. Three gyroscopes are arranged in a similar orthogonal configuration so that they can measure rotational position about three reference axes. Inclusion of three magnetometers enables dynamic orientation calculations.

The operating system 122 provides a programmatic interface for programs 124 running on the processor 102 allowing them to request functionality from the operating system 122. This programmatic interface may take the form of procedures, i.e. system calls, which a program 120 running on the processor 102 may use in order to invoke the operating system 122 and request it to provide desired functionality. In response to receiving a request for functionality, the operating system 122 may transmit control messages to, receive status information from, transmit data to and/or receive data from components (e.g. 106, 108, 110, 112, 114, 116, 118, 126, 128, 130, 132, 134, 136, 138, 140, 142, 144, 146, 148) connected to the system bus 104 in order to provide the requested functionality, and may also return data to the requesting program 120 as a result.

The operating system 122 may provide a file system for storing, modifying, and accessing files or other data held in non-volatile storage 106. The file system may be accessible to other programs 124 running on the processor 102 via the programmatic interface provided by the operating system 122.

The user may use the operating system 122 to start the programs 124 once they are installed on the computing device 100. The programs 124 may include a number of components that are configured to allow the user to access resources and/or data held in non-volatile storage 106 of the computing device 100. These components of the programs 124 may include a rendering engine 152, core services 154, service plug-ins 156, application services 158, and applications 160. These components may use the programmatic interface provided by the operating system 122 (i.e. system calls) to request functionality from the operating system 122 (for example to access the file system, send/receive messages, use the network interface 112, etc.).

The programs 124 running on the processor 102 can process user input obtained from a user input interface 110 that receives user input from a user input device or devices (not shown).

The applications 160 may include a security application 162 that provides a user interface that may be rendered by the graphics processing component 114 and displayed on the display 116. The user interface enables the user to enter identification and authentication details for accessing secured resources and/or data using the computing device 100. The security application 162 may display an authentication user interface which may be displayed when the user attempts to access secure data. The authentication user interface may also be the first user interface that is displayed to a user when the program 120 is started, or when the computing device 100 is first turned on, or at any other time when a conventional password is required. The security application 162 may also provide a user interface to the user that allows other applications 152 or programs 124 to be started, or connections via the network interface(s) 112 to be launched, through which applications programs or network interface(s) data may be accessed.

To view secure data or documents, the user may be required to open the security application 162 which acts as a portal through which the user can access secure data and documents.

The security application 162 monitors security factors based on data from the sensors and/or received via the network interface(s) 112 from other devices in order to gauge the risk to data may be accessed using the computing device 100 in its current environment and initiates actions to be taken to inhibit access to the data based on that risk. In particular, the security application 162 is configured to initiate an action to inhibit access to data using the computing device 100 if it determines, based on detected environmental conditions, that the environment in which the computing device 100 is may be used and data is may be accessed is not secure.

For example, the security application 162 may monitor predetermined security factors, may initiate a dedicated timer (using the processor) when each security factor satisfies a respective security condition (for example, exceed a relative threshold limit), when a given security factor satisfies its respective condition for more than a predetermined time (and the security factor has continued to satisfy its respective condition throughout the duration of the timed period) a 'trigger' is set to true. Then when a predetermined number of triggers are simultaneously true an appropriate action to inhibit access to data is initiated. The security application 162 may be configured to reset the triggers after a predetermined time has elapsed and/or when an action to inhibit access to data is initiated. The timers may be stopped if, before the predetermined time period has elapsed, the respective security factor no longer satisfies its associated security condition, and/or also when an action to inhibit access to data is initiated.

The security application 162 may include data processing software for processing and/or analyzing data obtained from the sensors and/or from other devices. For example, the security application 162 may include image processing software arranged to detect and count faces, recognize the faces of individuals, detects eye movement (in particular eyes looking toward the computing device 100) and/or gestures. The security application 162 may include software arranged to detect a human voice, distinguish between different voices, and/or determine the number of voices in a detected sound. The security application 162 may, alternatively or additionally, make use of such data processing capabilities available to the computing devices 100 from other programs 124.

The action to inhibit access to data may include issuing an alert to the user (and/or to the owner of the data may be accessed). The alert may include one or more of a visible alert, and audible alert, a vibration alert. Alerting the user brings the potential security threat to the attention of the user but still enables the user to decide whether he/she still wishes to continue accessing the data. This reduces the occurrence of users becoming frustrated by not may be able to access data even though they deem the environment to be safe.

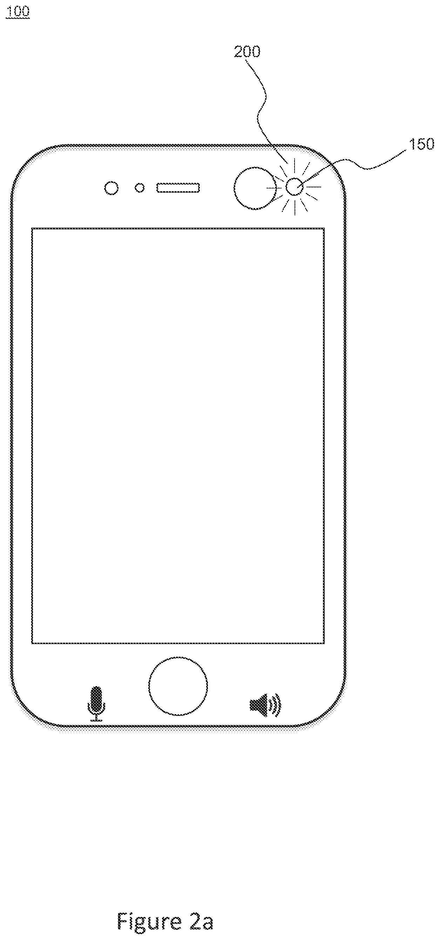

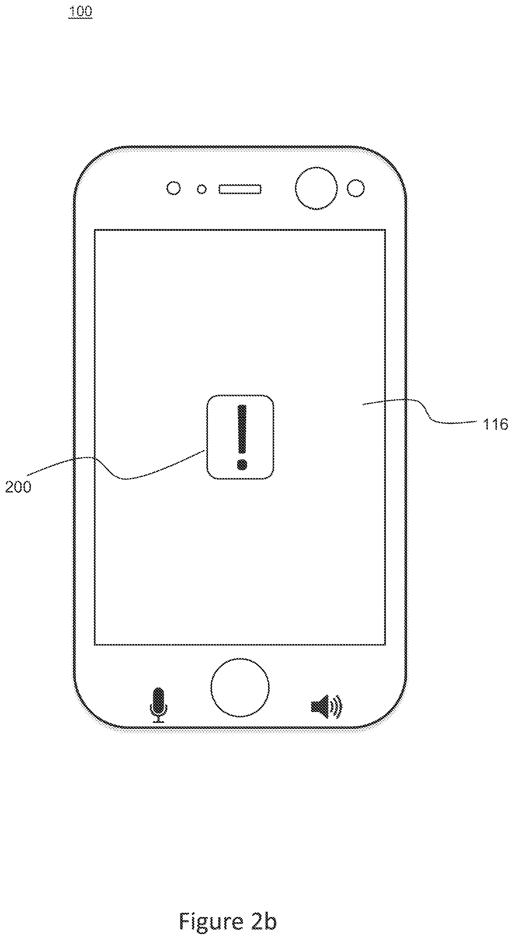

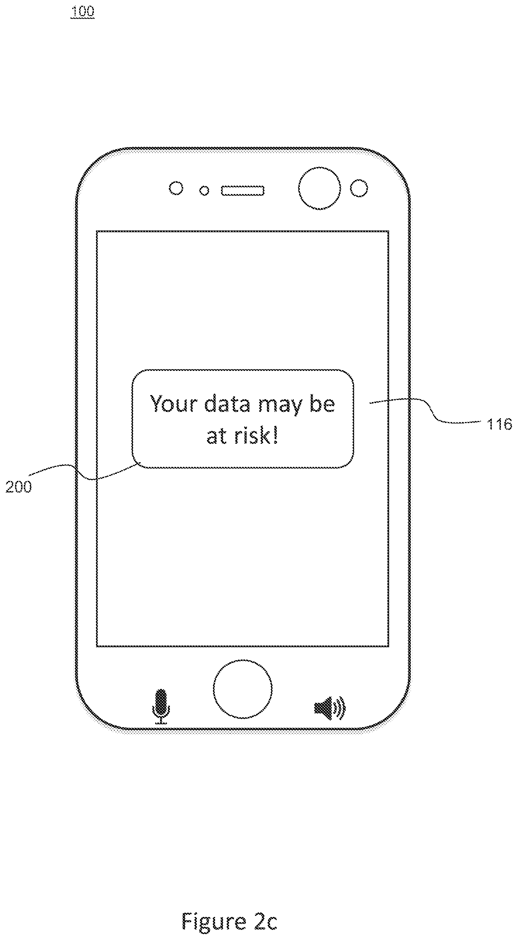

Figures 2a to 2c depict specific examples of actions including a visual alert 200. Visible alerts may comprise activating a light, such as a light 150 (for example an LED) mounted on or within the computing device 100 (figure 2a), displaying an icon or warning symbol 202 on-screen (figure 2b), or providing an on-screen popup notification or message 204 using the graphics processing module 114 and the display 116 (figure 2c). Using visual alerts 200 has the advantage that the user will see them as he/she is viewing data displayed by the computing device 100.

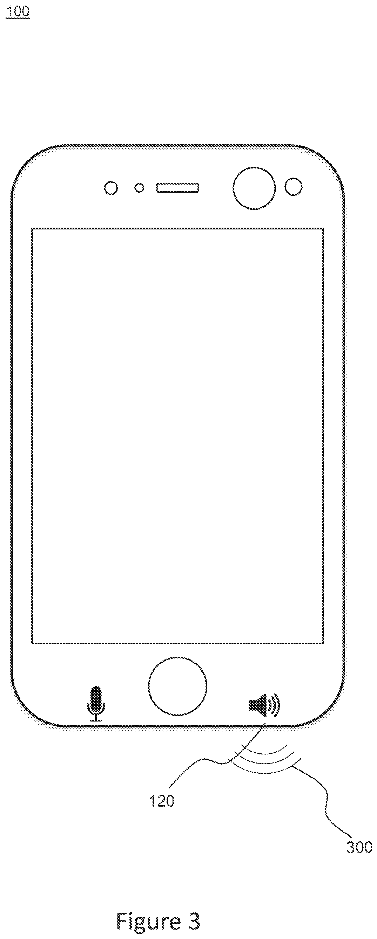

Figure 3 depicts the action may be an audible alert 300. Audible alerts 300 may be, for example, a sound, jingle, alarm, or audible notification using the speaker 120. Such alerts have the advantage that even when the user is not looking at the computing device 100 (for example, if he/she is distracted temporarily), they may still be alerted.

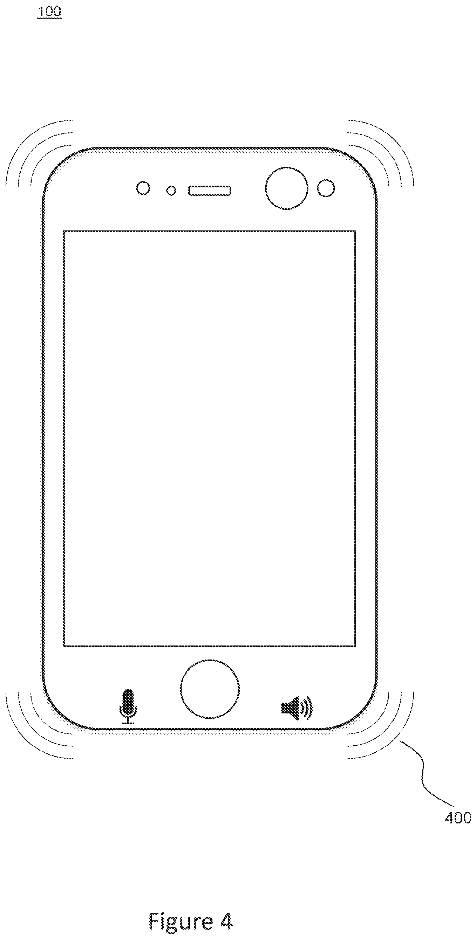

Figure 4 depicts the action may be a vibration alert 400. Vibration alerts 400 may be provided by activating the vibration module 126. Using vibration alerts 400 instead of visual alerts 200 or audible alerts 300 has the advantage that alerts are more subtle and may only be detectable to a user holding the computing device 100. This enables the authorized user to be alerted to a possible security threat, without alerting potential unauthorized people to the fact that their presence is detected. Using vibration alerts 400 instead of visual alerts 200 or audible alerts 300 has the advantage that alerts are more likely to be noticed by the user (for example, when the computing device is in the pocket of the user and/or in a noisy environment).

The action to inhibit access to data may include preventing access to data by, for example, preventing display of the data, locking the computing device 100, locking an application running on the computing device 100 through which the data is may be accessed, obscuring the display 116 or data displayed on the display 116, encrypting the data, and deleting the data. Preventing access to data, in addition to or as an alternative to initiating an alert increases the security of the data, particularly if for some reason the authorized user has left the computing device 100 unattended and is therefore unable to react to alerts.

It will be understood that the action to inhibit access to data may include any of the actions described above in any combination, and may also include other actions that inhibit access to data, or result in access to data may be inhibited.

The action may include notifying an owner of the data if the user is not the owner. For example, where an employee accesses data owned by his/her employer and the security application 162 initiates an action to inhibit access to data, it may in addition to or as an alternative to the actions described above, send a push notification or an email to a system operator responsible for security of data owned by the employer. Alternatively, or in addition, the security application 162 may record the event on a remote server for statistical analysis.

The security application 162 may monitor the environment of the computing device 100 and initiate actions to protect data or inhibit access to the data in accordance with a security policy that specifies the security factors that are to be monitored, the security conditions to be satisfied before initiating actions to protect data or inhibit access to data, and the actions. In particular the security policy may prescribe which of the security factors (determined from data from detectors and sensors available to the computing device 100 or based on data from other devices via the network interface(s) 112) should be monitored, the threshold limits or boundaries of those security factors that should not be exceeded (i.e. it defines the security conditions that are to be satisfied), a duration for which the threshold limits must individually or collectively be exceeded in order that the security application 162 determines that they are exceeded, and the number and/or type of exceeded limits (that is 'triggers') that need to be simultaneously exceeded to cause the security application 162 to initiate an action.

The security application 162 monitors the various security factors and various thresholds as prescribed by the security policy, and when a combination of these thresholds (prescribed by the policy) are exceeded, takes action. The thresholds are set to levels that, when exceeded, indicate that the user is in or near a number of other people (for example, in a public place such as on public transport) while accessing sensitive data.

For example, the security application 162 may monitor noise levels from the microphone 128, a number of faces detected by the camera 130, the presence of other computing devices using the Bluetooth network interface 112, the wireless network to which the WiFi network interface is connected, and the location, direction, and/or velocity of the computing device using the location module 144. The security application 162 may monitor to determine if noise measurements taken from the microphone 128 indicate the presence of a large number of people (such as in a public place), data captured by the camera 130 (for example, a "front-facing" camera) indicates that more than one face is detected in a position from where a person could view the display 116 of the computing device 100, data from the Bluetooth network interface 112 indicates that multiple devices are detected, a WiFi connection via a WiFi network interface 112 indicates that the computing device 100 is in a location other than the office of the user (for example, a public WiFi hotspot), and/or data from the location module 144 (using, for example, GPS) indicates that the computing device 100 is heading in a particular direction or traveling above a particular velocity. The security application 162 may determine that data accessed using the computing device 100 is at risk if it determines that a plurality of these indications are determined at the same time.

The security policy may be based on a perceived level of confidentiality of a particular document or type of data. For example, documents that are considered to be more sensitive may have a security policy that causes an action to be initiated more readily than a relatively less sensitive document. Similarly, the security policy for some users may be configured to cause an action more readily than for other users. For example, the security policy of a more senior user may be more sensitive to security factors than the policy of a less senior user, based on the assumption that data and documents to which the more senior user has access are more likely to be of a confidential nature and/or are likely to be more sensitive.

The security policy also takes account of the type of computing device 100 that data is may be accessed with, and in particular, the available functions of that computing device 100. For example, the security policy may prescribe that environmental conditions which the computing device 100 is not able to detect or sense do not need to be monitored. The security policy also specifies that where a computing device 100 is unable to monitor a given security factor, the computing device 100 is to obtain information relating to the security factors that it cannot itself monitor from another computing device (for example, via the network interface 112).

The security policy may be stored in the non- volatile storage 106 for example. The security policy may be defined for the user and/or for specific documents or items of data. The security policy may also specify the actions to be initiated in the event that the security factors determined on the basis of the environmental conditions satisfy the specified security conditions.

The security policy may be installed in the computer device 100 along with the security application 162, or may be received from a remote server. Receiving the security policy from a remote server enables the security policy to be updated as security requirements change. For example, as the status of the user changes or the confidential nature of a document changes, the security policy can be remotely updated accordingly.

Updates to the security policy may be pushed from a remote server to the computing device 100 as required or the computing device 100 may periodically connect to the remote server to retrieve any updates to the security policy. The security application 162 may retrieve the latest security policy during initialization (of the security application 162) associated with the user or documents to which the user has access.

In use, to view sensitive data or a confidential document, the user opens the security application 162 and views a sensitive document or sensitive data via the security application 162. The security application 162 retrieves the latest security policy relating to the user and/or the data (or document), either from the non-volatile storage or from a remote server, and then starts to monitor the environment of the computing device 100 according to the security policy.

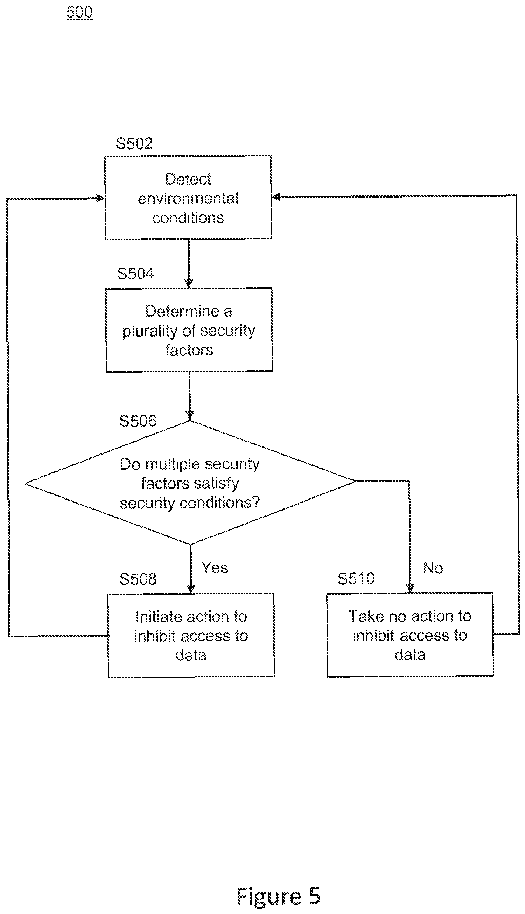

Figure 5 shows the steps of a method 500 performed by the security application 162 to increase the security of data accessible using a computing device 100. The method 500 may be implemented in accordance with a security policy as described above.

At step S502, environmental conditions relating to the environment in which the computing device 100 is located are detected. These environmental conditions may be detected using one or more of the sensors of the computing device 100 (e.g. 122, 124, 126, 128, 130, 132, 134, 136, 138, 140, 142) or the network interface(s) 112 of the computing device 100 or may be detected by another device separate to the computing device 100 and communicated to the communication device (via the network interface, for example). Where an environmental condition is detected by another device (than the computing device 100), data indicative of the environmental condition may be transmitted by the other device for receipt at the computing device 100. The computing device 100 may receive that data and on the basis of the data determine a security factor.

The environmental conditions that are detected may include one or more of: a sound level or a number of detected voices, detected for example with the microphone 128. The environmental condition may be a number of detected faces detected for example using the camera 122 (together with image processing software), or a number of proximate other computing devices detected for example using the network interface(s) 112 or the proximity sensor 140, or a distance between the computing device 100 and a predetermined geographic location or a detected velocity or acceleration of the computing device 100 as determined using the location module 138.

At step S504, the security application 162 determines a plurality of security factors. Each of the security factors is determines based on a detected environmental condition. For example, the security factors may relate to one or more of: a number of people in close proximity to the computing device 100, a detected location of the computing device, the presence of a communications network, and the presence of other trusted computing devices.

At step S506, the security application 162 may determine whether each of the determined security factors satisfies a respective security condition. The security conditions typically correspond in nature with the security factors. That is the security conditions may include one or more of a sound level, a number of detected voices, a number of detected faces, a number of proximate other computing devices, distance from a geographic location, and a detected velocity or acceleration of the computing device.

Whether a security factor satisfies its respective security condition may be determined by comparing a value (or values) associated with the security factor with a respective threshold value. The threshold values depend on the nature of the security factor and may include one or more of: a sound level, a number of detected voices, a number of detected faces, a number of proximate other computing devices, distance from a geographic location, and a detected velocity or acceleration of the computing device 100.

If the security application 162 determines that multiple security factors satisfy their respective security conditions, then at step S508 the security application 162 initiates an action to inhibit access to data as described above. If however the security application 162 does not determine that multiple security factors satisfy their respective security conditions, then at the security application 162 takes no action to inhibit access to data. Initiating the action on condition that multiple ones of the plurality of security factors satisfy their respective security conditions minimizes the chance of falsely determining that access to the data should be inhibited.

As indicated by the return paths in the flow diagram shown in figure 5, the security application 162 may repeat the steps to provide continuous or periodic monitoring of the environment in which the computing device 100 is may be used. This enables the security of data may be accessed by the computing device 100 to be maintained (i.e. by initiating an action as described above) as the environment in which the computing device 100 is may be operated changes. This may happen if, for example, people enter or leave a room in which the computing device 100 is may be used and/or, where the computing device 100 is a mobile or portable device, if the location in which the computing device 100 is may be used changes.

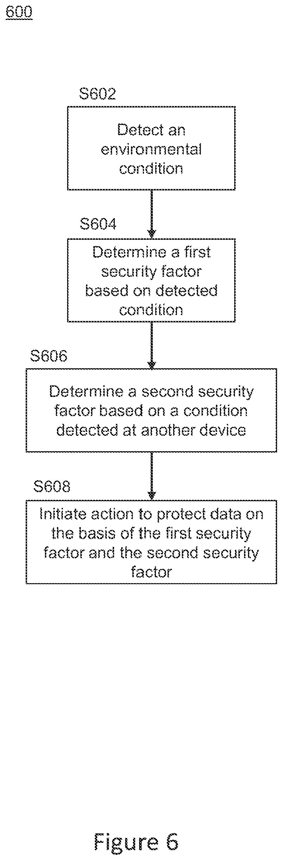

Figure 6 shows the steps of another method 600 that may be performed by the security application 162 to increase the security of data accessible using a computing device 100. The method 600 may be implemented in accordance with a security policy as described above.

In the method 600 of figure 6, when determining whether to act to protect data, the computing device 100 takes account of information about its environment provided by, or obtained from, another different device. This improves the information available to the computing device 100 relating to its environment, enabling it to improve the accuracy of determination of the safety or otherwise of same.

The computing device 100 uses information about its environment provided by another device if that other device has a capability to sense a property of the environment that the computing device 100 itself does not have, thereby extending the capability of the computing device 100 to monitor its environment accurately and initiate actions to protect data from a more informed position. In particular, a computing device 100 with limited ability to sense its own environment is able to minimize the occurrence of falsely determining that its environment is unsafe by initiating actions to protect data based at least partly on information provided by, or obtained from, another device.

The computing device 100 determines that it does not have a sensor capable of sensing an environmental condition corresponding to a security factor specified in the current security policy. In response to determining that it does not have a suitable sensor, the computing device 100 tries to obtain information relating to the environmental condition from one or more other devices that are close enough to the computer device 100 to satisfy a proximity requirement specifying a range within which other computing devices must be for their information to be considered relevant to the environment of the computing device 100; other devices within that range may be considered to be in the same, or a similar, environment to the computing device 100. The computer device 100 may determine that another computing device is within an acceptable range based on location information provided by the other
computing device (for example, using GPS data), or may satisfy the proximity requirement by trying to obtain the information using a communication medium that has a range corresponding with the proximity requirement. For example, the computing device 100 may use a Bluetooth interface to try to obtain the information. The computing device 100 may poll a list of locally available Bluetooth-enabled devices and, on detection and validation of other devices having the appropriate capability, request information relating to the security factor and/or the environmental condition from one or more of the other devices thereby using the capability of the other device.

For example, where the security policy specifies that the computing device 100 is within a particular geographic area, but the computing device 100 has no means to determine its own location, the computing device 100 may request the location of a nearby device to determine whether it satisfies the security conditions specified in the security policy. Whilst the other device remains available (via Bluetooth for example) the computing device 100 may periodically make further requests for that information so that it may continuously monitor it environment in accordance with the security policy. In the event that the other device becomes unavailable, the computing device 100 may poll its list of available (Bluetooth-enabled) devices and request the information from another nearby device. This approach is event driven using the appearance and disappearance of a second device as the triggering mechanism, and enables the computing device 100 to continue to monitor its environment without needing to communicate with a remote server.

Alternatively, on determining that it does not have the necessary sensing capability to monitor its security in accordance with the security policy, the computing device 100 may request information regarding its environment from a server (for example, the server that issues security policies). The server may continually monitor each of the computing devices 100 to which it issues security policies and/or require that each of the computing devices 100 regularly provides data relating to its respective environment to the server.

For example, the server may require that each device provides information relating to its current location and one or more environmental conditions or security factors corresponding to that location. In response to a request for information from the computing device 100, the server may provide the relevant information to the computing device 100 based on information provided by another computing device. The server can refer to the security policy of other devices directly and can determine whether or not another device has the necessary capability and is in a suitable location (i.e. satisfies the location requirement) when responding to a request from the computing device 100. This approach assigns the decision making (regarding what information should be requested from what other devices) to the server and so minimizes the burden on the computing device 100 itself.

At step S602, environmental conditions relating to the environment in which the computing device 100 is located are detected at the computing device 100. These environmental conditions may be detected using one or more of the sensors of the computing device 100 (e.g. 122, 124, 126, 128, 130, 132, 134, 136, 138, 140, 142) or, where the environmental conditions relate to the presence of other nearby devices, the network interface(s) 112 of the computing device 100.

At step S604, the security application 162 determines a security factor based on the environmental condition detected at step S602.

The environmental conditions that are detected and the security factors determined on the basis of the detected environmental conditions may include any of those described above with reference to figure 5.

At step S606, the security application 162 determines a second security factor on the basis of an environmental condition detected at another, different, computing device. The computing device 100 may, for example, receive data indicative of the environmental condition from the other device via one or more network interfaces 112. For example, the computing device 100 may receive such data via a Bluetooth or WiFi connection.

At step S608, the security application 162 initiates action to protect data on the basis of both the security factor determined at step S604 and the security factor determined at step S606. In other words, the security application 162 initiates an action to protect data, which may be an action to inhibit access to data as described above for example, taking account of environmental conditions detected at both the computing device 100 and at least one other device. By initiating the action to protect the data on the basis of both the first security factor and the second security factor minimizes the chance of falsely determining that data needs to be protected. It also enables the security application 162 to obtain information relating to the environment in which the computing device 100 may be operated that might otherwise not be available to the computing device 100 (because of its limited functionality, for example).

The above embodiments are to be understood as illustrative examples of the application. Further embodiments of the application are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the application, which is defined in the accompanying claims.

## Claims

1. A mobile computing device (100) for accessing data, the mobile computing device being arranged to:
determine (S604) a first security factor on the basis of an environmental condition related to an environment of the mobile computing device (100) and detected (S602) at the mobile computing device (100);
determine (S606) a second security factor on the basis of an environmental condition related to said environment of the mobile computing device (100) and detected at another, different, mobile computing device; and
initiate (S608), at the mobile computing device (100), an action to protect said data on the basis of the first security factor and the second security factor, wherein said action is initiated in accordance with a security policy specifying the first and second security factors and said action, and the mobile computing device (100) is arranged to:
determine that it does not have a sensor capable of sensing an environmental condition related to the environment of the mobile computing device (100) and corresponding to a security factor specified in the security policy; and
in response to determining that it does not have a sensor capable of sensing an environmental condition related to the environment of the mobile computing device (100) and corresponding to a security factor specified in the security policy, request information relating to said environmental condition from one or more further mobile computing devices determined to have a suitable sensor.

2. A mobile computing device (100) according to claim 1, further arranged to poll computing devices for determining said further mobile computing devices having a suitable sensor.

3. A mobile computing device (100) according to Claim 1, further arranged to request said information relating to said environmental condition from one or more further mobile computing devices having a suitable sensor via a remote server.

4. A mobile computing device (100) according to Claim 1, wherein the first security factor relates to the same environmental condition as the second security factor, and wherein the computing device (100) is arranged to:
compare the first security factor with the second security factor;
determine a confidence value associated with the first security factor on the basis of said comparison; and
initiate (S608) said action in response to the confidence value exceeding a predetermined threshold.

5. A mobile computing device (100) according to Claim 1, arranged to detect environmental conditions using one or more of a microphone, an image sensor, a Bluetooth receiver, a Wi-Fi receiver, a geographic location determining device, and a GPS receiver.

6. A mobile computing device (100) according to Claim 1, wherein data indicative of the environmental condition detected at the other mobile computing device is received, at the mobile computing device (100), via a wireless communications means.

7. A mobile computing device (100) according to Claim 1, wherein the first security factor relates to a different environmental condition to the second security factor.

8. A mobile computing device (100) according to Claim 7, arranged to: initiate (S608) said action on condition that the first and second security factors satisfy respective security conditions.

9. A mobile computing device (100) according to any of Claim 1 to Claim 8, wherein the first and second security factors each relate to one or more of: a number of people in close proximity to the mobile computing device (100), a detected location of the mobile computing device (100), the presence of a communications network, and the presence of other trusted mobile computing devices.

10. A mobile computing device (100) according to any of Claim 1 to Claim 9, wherein the detected environmental conditions include one or more of: a sound level, a number of detected voices, a number of detected faces, a number of proximate other mobile computing devices, distance from a geographic location, a detected velocity of the mobile computing device (100), and a detected acceleration of the mobile computing device (100).

11. A mobile computing device (100) according to any of Claim 1 to Claim 10, wherein each of the first and second security conditions is satisfied when a value associated with the respective security factor exceeds a respective threshold value, and wherein the threshold values include one or more of: a sound level, a number of detected voices, a number of detected faces, a number of other mobile computing devices within a specified proximity, a detected location, a detected velocity of the mobile computing device (100), and a detected acceleration of the mobile computing device (100).

12. A mobile computing device (100) according to any of Claim 1 to Claim 11, wherein the action comprises issuing an alert, and wherein issuing the alert comprises one or more of: activating a visible alert (200), activating an audible alert (300), activating a vibration unit (400), providing an on-screen notification (204), providing an audible notification, initiating an email or push notification, and recording a security state event on a remote server.

13. A mobile computing device (100) according to any of Claim 1 to Claim 12, wherein the action comprises preventing access to data, and wherein access to the data is prevented by one or more of: preventing display of the data, locking the mobile computing device, locking an application running on the mobile computing device, obscuring displayed data, encrypting the data, and deleting the data.

14. A method (600) at a mobile computing device (100) for increasing the security of data accessible using the mobile computing device (100), the method comprising:
determining (S604) a first security factor on the basis of an environmental condition related to an environment of the mobile computing device (100) and detected (S602) at the mobile computing device (100);
determining (S606) a second security factor on the basis of an environmental condition related to said environment of the mobile computing device (100) and detected at another, different, mobile computing device; and
initiating (S608), at the mobile computing device (100), an action to protect said data on the basis of the first security factor and the second security factor, wherein said action is initiated in accordance with a security policy specifying the first and second security factors and said action, and the method comprises:
determining that the mobile computing device (100) does not have a sensor capable of sensing an environmental condition related to the environment of the mobile computing device (100) and corresponding to a security factor specified in the security policy; and
in response to determining that the mobile computing device (100) does not have a sensor capable of sensing an environmental condition related to the environment of the mobile computing device (100) and corresponding to a security factor specified in the security policy, requesting information relating to said environmental condition from one or more further mobile computing devices determined to have a suitable sensor.

15. A computer program (162) comprising executable instructions which, when executed by a mobile computing device (100), cause the mobile computing device (100) to perform the steps of the method according to Claim 14.

## Patentansprüche

1. Mobile Recheneinrichtung (100) zum Zugriff auf Daten, wobei die mobile Recheneinrichtung dazu angeordnet ist:
einen ersten Sicherheitsfaktor auf der Basis einer Umgebungsbedingung zu bestimmen (S604), die mit einer Umgebung der mobilen Recheneinrichtung (100) im Zusammenhang steht und die auf der mobilen Recheneinrichtung (100) erfasst wurde (S602);
einen zweiten Sicherheitsfaktor auf der Basis einer Umgebungsbedingung zu bestimmen (S604), die mit einer Umgebung der mobilen Recheneinrichtung (100) im Zusammenhang steht und die auf einer anderen mobilen Recheneinrichtung erfasst wurde; und
auf der mobilen Recheneinrichtung (100) eine Aktion auszulösen (S608), um die Daten auf der Basis des ersten Sicherheitsfaktors und des zweiten Sicherheitsfaktors zu schützen, wobei die Aktion in Übereinstimmung mit einer Sicherheitsrichtlinie ausgelöst wird, die den ersten und zweiten Sicherheitsfaktor und die Aktion angibt, und wobei die mobile Recheneinrichtung (100) dazu angeordnet ist:
zu bestimmen, dass sie keinen Sensor aufweist, der eine Umgebungsbedingung erfassen kann, die im Zusammenhang mit der Umgebung der mobilen Recheneinrichtung (100) steht und einem
in der Sicherheitsrichtlinie angegebenen Sicherheitsfaktor entspricht; und
in Reaktion auf das Bestimmen, dass sie keinen Sensor aufweist, der eine Umgebungsbedingung erfassen kann, die im Zusammenhang mit der Umgebung der mobilen Recheneinrichtung (100) steht und einem in der Sicherheitsrichtlinie angegebenen Sicherheitsfaktor entspricht, eine Information bezogen auf die Umgebungsbedingung von einer oder mehreren weiteren mobilen Recheneinrichtungen anzufordern, bei denen bestimmt wurde, dass sie einen geeigneten Sensor aufweisen.

2. Mobile Recheneinrichtung (100) nach Anspruch 1, die ferner dazu angeordnet ist, Recheneinrichtungen abzufragen zum Bestimmen der weiteren mobilen Recheneinrichtungen, die einen geeigneten Sensor aufweisen.

3. Mobile Recheneinrichtung (100) nach Anspruch 1, die ferner dazu angeordnet ist, die Information bezogen auf die Umgebungsbedingung von einer oder mehreren mobilen Recheneinrichtungen, die einen geeigneten Sensor aufweisen, über einen entfernten Server anzufordern.

4. Mobile Recheneinrichtung (100) nach Anspruch 1, wobei der erste Sicherheitsfaktor dieselbe Umgebungsbedingung betrifft wie der zweite Sicherheitsfaktor und wobei die Recheneinrichtung (100) dazu angeordnet ist:
den ersten Sicherheitsfaktor mit dem zweiten Sicherheitsfaktor zu vergleichen;
einen mit dem ersten Sicherheitsfaktor verknüpften Konfidenzwert auf der Basis des Vergleichs zu bestimmen; und
die Aktion in Reaktion auf den eine vorbestimmte Schwelle übersteigenden Konfidenzwert auszulösen (S608).

5. Mobile Recheneinrichtung (100) nach Anspruch 1, die dazu angeordnet ist, Umgebungsbedingungen mithilfe von einem oder mehreren von einem Mikrofon, einem Bildsensor, einem Bluetooth-Empfänger, einem Wi-Fi-Empfänger, einem Gerät zur Bestimmung der geografischen Position und einem GPS-Empfänger zu erfassen.

6. Mobile Recheneinrichtung (100) nach Anspruch 1, wobei die Daten, die die Umgebungsbedingung anzeigen, die an der anderen mobilen Recheneinrichtung erfasst wurde, über ein drahtloses Kommunikationsmittel auf der mobilen Recheneinrichtung (100) empfangen werden.

7. Mobile Recheneinrichtung (100) nach Anspruch 1, wobei der erste Sicherheitsfaktor eine andere Umgebungsbedingung betrifft als der zweite Sicherheitsfaktor.

8. Mobile Recheneinrichtung (100) nach Anspruch 7, die dazu angeordnet ist: die Aktion für die Bedingung auszulösen, dass der erste und zweite Sicherheitsfaktor entsprechende Sicherheitsbedingungen erfüllen.

9. Mobile Recheneinrichtung (100) nach einem von Anspruch 1 bis Anspruch 8, wobei der erste und zweite Sicherheitsfaktor jeweils eins oder mehrere betreffen von: einer Anzahl von Personen in unmittelbarer Nähe der mobilen Recheneinrichtung (100), einer erfassten Position der mobilen Recheneinrichtung (100), dem Vorhandensein eines Kommunikationsnetzwerks und dem Vorhandensein anderer vertrauenswürdiger mobiler Recheneinrichtungen.

10. Mobile Recheneinrichtung (100) nach einem von Anspruch 1 bis Anspruch 9, wobei die erfassten Umgebungsbedingungen eins oder mehrere umfassen von: einem Geräuschpegel, einer Anzahl erfasster Stimmen, einer Anzahl erfasster Gesichter, einer Anzahl benachbarter anderer mobiler Recheneinrichtungen, einem Abstand zu einer geografischen Position, einer erfassten Geschwindigkeit der mobilen Recheneinrichtung (100) und einer erfassten Beschleunigung der mobilen Recheneinrichtung (100).

11. Mobile Recheneinrichtung (100) nach einem von Anspruch 1 bis Anspruch 10, wobei jede der ersten und zweiten Sicherheitsbedingung erfüllt ist, wenn ein mit dem entsprechenden Sicherheitsfaktor verknüpfter Wert einen entsprechenden Schwellenwert übersteigt, und wobei die Schwellenwerte eins oder mehrere umfassen von: einem Geräuschpegel, einer Anzahl erfasster Stimmen, einer Anzahl erfasster Gesichter, einer Anzahl benachbarter anderer mobiler Recheneinrichtungen, einer erfassten Position, einer erfassten Geschwindigkeit der mobilen Recheneinrichtung (100) und einer erfassten Beschleunigung der mobilen Recheneinrichtung (100).

12. Mobile Recheneinrichtung (100) nach einem von Anspruch 1 bis Anspruch 11, wobei die Aktion das Auslösen eines Alarms umfasst und wobei das Auslösen des Alarms eins oder mehrere umfasst von: Aktivieren eines visuellen Alarms (200), Aktivieren eines akustischen Alarms (300), Aktivieren einer Vibrationseinheit (400), Bereitstellen einer Bildschirmmeldung (204), Bereitstellen einer akustischen Meldung, Initiieren einer E-Mail oder einer Push-Benachrichtigung und Aufzeichnen eines Sicherheitszustandsereignisses auf einem entfernten Server.

13. Mobile Recheneinrichtung (100) nach einem von Anspruch 1 bis Anspruch 12, wobei die Aktion das Verhindern von Zugriff auf die Daten umfasst, und wobei der Zugriff auf die Daten verhindert wird durch eins oder mehrere von:
Verhindern der Anzeige der Daten, Sperren der mobilen Recheneinrichtung, Sperren einer auf der mobilen Recheneinrichtung laufenden Anwendung, Verbergen angezeigter Daten, Verschlüsseln der Daten und Löschen der Daten.

14. Verfahren (600) auf einer mobilen Recheneinrichtung (100) zum Erhöhen der Sicherheit von Daten, auf die mithilfe der mobilen Recheneinrichtung (100) zugegriffen werden kann, wobei das Verfahren umfasst:
Bestimmen (S604) eines ersten Sicherheitsfaktors auf der Basis einer Umgebungsbedingung, die mit einer Umgebung der mobilen Recheneinrichtung (100) im Zusammenhang steht und die auf der mobilen Recheneinrichtung (100) erfasst wurde (S602);
Bestimmen eines zweiten Sicherheitsfaktors auf der Basis einer Umgebungsbedingung, die mit einer Umgebung der mobilen Recheneinrichtung (100) im Zusammenhang steht und die auf einer anderen mobilen Recheneinrichtung erfasst wurde; und
Auslösen (S608) einer Aktion auf der mobilen Recheneinrichtung (100), um die Daten auf der Basis des ersten Sicherheitsfaktors und des zweiten Sicherheitsfaktors zu schützen, wobei die Aktion in Übereinstimmung mit einer Sicherheitsrichtlinie, die den ersten und zweiten Sicherheitsfaktor und die Aktion angibt, ausgelöst wird und das Verfahren umfasst:
Bestimmen, dass die mobile Recheneinrichtung (100) keinen Sensor aufweist, der eine Umgebungsbedingung erfassen kann, die mit der Umgebung der mobilen Recheneinrichtung (100) in Zusammenhang steht und einem in der Sicherheitsrichtlinie angegebenen Sicherheitsfaktor entspricht; und
in Reaktion auf das Bestimmen, dass die mobile Recheneinrichtung (100) keinen Sensor aufweist, der eine Umgebungsbedingung erfassen kann, die im Zusammenhang mit der Umgebung der mobilen Recheneinrichtung (100) steht und einem in der Sicherheitsrichtlinie angegebenen Sicherheitsfaktor entspricht, Anfordern einer Information bezogen auf die Umgebungsbedingung von einer oder mehreren weiteren mobilen Recheneinrichtungen, bei denen bestimmt wurde, dass sie einen geeigneten Sensor aufweisen.

15. Computerprogramm (162), umfassend ausführbare Anweisungen, die, wenn von einer mobilen Recheneinrichtung (100) ausgeführt, bewirken, dass die mobile Recheneinrichtung (100) die Schritte des Verfahrens nach Anspruch 14 durchführt.

## Revendications

1. Dispositif informatique mobile (100) pour accéder à des données, le dispositif informatique mobile étant agencé pour :
déterminer (S604) un premier facteur de sécurité sur la base d'une condition environnementale associée à un environnement du dispositif informatique mobile (100) et détectée (S602) au niveau du dispositif informatique mobile (100) ;
déterminer (S606) un second facteur de sécurité sur la base d'une condition environnementale associée audit environnement du dispositif informatique mobile (100) et détectée au niveau d'un autre dispositif informatique mobile, différent ; et
initier (S608), au niveau du dispositif informatique mobile (100), une action pour protéger lesdites données sur la base du premier facteur de sécurité et du second facteur de sécurité, ladite action étant initiée selon une politique de sécurité spécifiant les premier et second facteurs de sécurité et ladite action, et le dispositif informatique mobile (100) étant agencé pour :
déterminer qu'il ne possède pas de capteur apte à détecter une condition environnementale associée à l'environnement du dispositif informatique mobile (100) et correspondant à un facteur de sécurité spécifié dans la politique de sécurité ; et
en réponse à la détermination du fait qu'il ne possède pas de capteur apte à détecter une condition environnementale associée à l'environnement du dispositif informatique mobile (100) et correspondant à un facteur de sécurité spécifié dans la politique de sécurité, demander des informations concernant ladite condition environnementale en provenance d'un ou plusieurs dispositifs informatiques mobiles supplémentaires déterminés comme ayant un capteur approprié.

2. Dispositif informatique mobile (100) selon la revendication 1, en outre agencé pour sonder des dispositifs informatiques pour déterminer lesdits dispositifs informatiques mobiles supplémentaires ayant un capteur approprié.

3. Dispositif informatique mobile (100) selon la revendication 1, en outre agencé pour demander lesdites informations concernant ladite condition environnementale en provenance d'un ou plusieurs dispositifs informatiques mobiles supplémentaires ayant un capteur approprié par l'intermédiaire d'un serveur à distance.

4. Dispositif informatique mobile (100) selon la revendication 1, dans lequel le premier facteur de sécurité concerne la même condition environnementale que le second facteur de sécurité, et dans lequel le dispositif informatique (100) est agencé pour :
comparer le premier facteur de sécurité au second facteur de sécurité ;
déterminer une valeur de confiance associée au premier facteur de sécurité sur la base de ladite comparaison ; et
initier (S608) ladite action en réponse à la valeur de confiance dépassant un seuil prédéterminé.

5. Dispositif informatique mobile (100) selon la revendication 1, agencé pour détecter des conditions environnementales à l'aide d'un ou plusieurs éléments parmi un microphone, un capteur d'image, un récepteur Bluetooth, un récepteur Wi-Fi, un dispositif de détermination d'emplacement géographique et un récepteur GPS.

6. Dispositif informatique mobile (100) selon la revendication 1, dans lequel des données indicatives de la condition environnementale détectée au niveau de l'autre dispositif informatique mobile sont reçues, au niveau du dispositif informatique mobile (100), par l'intermédiaire de moyens de communication sans fil.

7. Dispositif informatique mobile (100) selon la revendication 1, dans lequel le premier facteur de sécurité concerne une condition environnementale différente par rapport au second facteur de sécurité.

8. Dispositif informatique mobile (100) selon la revendication 7, agencé pour : initier (S608) ladite action à condition que les premier et second facteurs de sécurité satisfassent des conditions de sécurité respectives.

9. Dispositif informatique mobile (100) selon l'une quelconque des revendications 1 à 8, dans lequel les premier et second facteurs de sécurité concernent chacun un ou plusieurs éléments parmi : un nombre de personnes à proximité étroite du dispositif informatique mobile (100), un emplacement détecté du dispositif informatique mobile (100), la présence d'un réseau de communication, et la présence d'autres dispositifs informatiques mobiles de confiance.

10. Dispositif informatique mobile (100) selon l'une quelconque des revendications 1 à 9, dans lequel les conditions environnementales détectées comprennent un ou plusieurs éléments parmi : un niveau sonore, un nombre de voix détectées, un nombre de visages détectés, un nombre d'autres dispositifs informatiques mobiles à proximité, une distance depuis un emplacement géographique, une vitesse détectée du dispositif informatique mobile (100), et une accélération détectée du dispositif informatique mobile (100).

11. Dispositif informatique mobile (100) selon l'une quelconque des revendications 1 à 10, dans lequel chacune des première et seconde conditions de sécurité est satisfaite lorsqu'une valeur associée au facteur de sécurité respectif dépasse une valeur de seuil respective, et dans lequel les valeurs de seuil comprennent un ou plusieurs éléments parmi : un niveau sonore, un nombre de voix détectées, un nombre de visages détectés, un nombre d'autres dispositifs informatiques mobiles à une proximité spécifiée, un emplacement détecté, une vitesse détectée du dispositif informatique mobile (100), et une accélération détectée du dispositif informatique mobile (100).

12. Dispositif informatique mobile (100) selon l'une quelconque des revendications 1 à 11, dans lequel l'action comprend la délivrance d'une alerte, et dans lequel la délivrance de l'alerte comprend une ou plusieurs opérations parmi : l'activation d'une alerte visible (200), l'activation d'une alerte audible (300), l'activation d'une unité de vibration (400), la fourniture d'une notification à l'écran (204), la fourniture d'une notification audible, l'initiation d'un courrier électronique ou d'une notification poussée, et l'enregistrement d'un événement d'état de sécurité sur un serveur à distance.

13. Dispositif informatique mobile (100) selon l'une quelconque des revendications 1 à 12, dans lequel l'action comprend l'empêchement d'accéder à des données, et dans lequel l'accès aux données est empêché par une ou plusieurs opérations parmi : l'empêchement d'affichage des données, le verrouillage du dispositif informatique mobile, le verrouillage d'une application s'exécutant sur le dispositif informatique mobile, l'obscurcissement de données affichées, le chiffrement des données, et l'effacement des données.

14. Procédé (600) au niveau d'un dispositif informatique mobile (100) pour augmenter la sécurité de données accessibles à l'aide du dispositif informatique mobile (100), le procédé comprenant :
déterminer (S604) un premier facteur de sécurité sur la base d'une condition environnementale associée à un environnement du dispositif informatique mobile (100) et détectée (S602) au niveau du dispositif informatique mobile (100) ;
déterminer (S606) un second facteur de sécurité sur la base d'une condition environnementale associée audit environnement du dispositif informatique mobile (100) et détectée au niveau d'un autre dispositif informatique mobile, différent ; et
initier (S608), au niveau du dispositif informatique mobile (100), une action pour protéger lesdites données sur la base du premier facteur de sécurité et du second facteur de sécurité, ladite action étant initiée selon une politique de sécurité spécifiant les premier et second facteurs de sécurité et ladite action, et le procédé comprenant :
déterminer que le dispositif informatique mobile (100) ne possède pas de capteur apte à détecter une condition environnementale associée à l'environnement du dispositif informatique mobile (100) et correspondant à un facteur de sécurité spécifié dans la police de sécurité ; et
en réponse à la détermination du fait que le dispositif informatique mobile (100) ne possède pas de capteur apte à détecter une condition environnementale associée à l'environnement du dispositif informatique mobile (100) et correspondant à un facteur de sécurité spécifié dans la politique de sécurité, demander des informations concernant ladite condition environnementale en provenance d'un ou plusieurs dispositifs informatiques mobiles supplémentaires déterminés comme ayant un capteur approprié.

15. Programme d'ordinateur (162) comprenant des instructions aptes à être exécutées qui, lorsqu'elles sont exécutées par un dispositif informatique mobile (100), amènent le dispositif informatique mobile (100) à réaliser les étapes du procédé selon la revendication 14.
